# EUROPEAN PATENT SPECIFICATION

(11) **EP 1 922 226 B1**
(45) Date of publication and mention of the grant of the patent: **21.04.2010**
(21) Application number: 06790452.4
(22) Date of filing: 11.08.2006
(51) Int. Cl.: B60P 1/44

(54) **COLUMNLIFT WITH CONNECTIONBEAM**
SÄULENHUBVORRICHTUNG MIT VERBINDUNGSTRÄGER
MONTE-CHARGE A COLONNES A POUTRELLE DE CONNEXION

(30) Priority: 17.08.2005 BE 200500395
(43) Date of publication of application: 21.05.2008
(73) Proprietor: CARCO BVBA, 2360 Oud-Turnhout (BE)
(72) Inventor: NUYTS, Henri, B 2300 TURNHOUT (BE)
(86) International application number: PCT/BE2006/000088
(87) International publication number: WO 2007/019652

(56) References cited:
- EP-A- 0 849 114
- EP-A1- 0 699 557
- DE-A1- 3 619 124
- US-A- 2 635 771
- US-A- 5 470 188

## Description

A liftsystem 1, such as well-known by EP 0 699 557 B1, can only have a good elevationfunction when the 2 elevatingcylinders are moving synchrome in regard to each other. If the load of the platform is placed out of the center or if the one slide (3) has an other resistance in his respectively column (5) as the other slide (3) of the one cylinder (10) has an other internal resistance as the other cylinder (10), the platform will cant on one side if there is no synchronisation system provided. Systems are well-known by using an oildevider between the hydraulic pompunit and the elevatingcylinders or f.e. a cable-system who is connecting both slides on two sides so that both slides are obligated by this cables to move equal, known by EP 0 849 114 A1. All this systems are complicated, expensive, or takes a lot of space.
US 5,470,188 discloses a lifting platform with a connection beam according to the preamble of claim 1.
Furthermore US 2,635,771 discloses a similar lifting system with a rigid frame with lift arms instead of a platform.

This invention makes it more easy, less expensive and more compact by forming a rigid sliding frame as following :

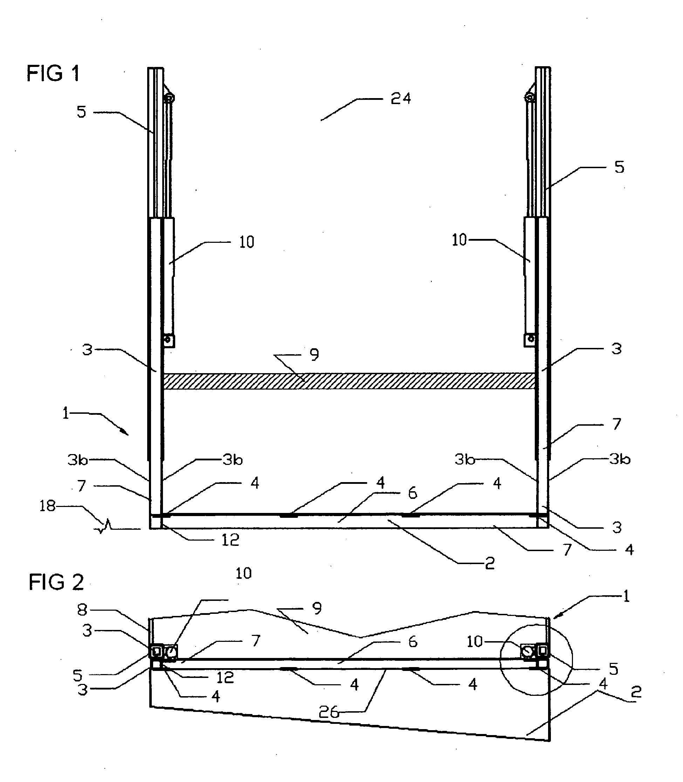

A liftsystem 1 provide with two almost vertical placed columns (rails) 5, both columns 5 on a distance and parallel to each other, and each column 5 provided with a slide 3, both slides 3 independed from each other, whereby each slide 3 can be moved along or through a said respectively column 5, each moved up by a respectively cylinder 10 and moved down at least by the weight of a loading platform 2 and the eventually load on it, and each slide 3 connected to said loading platform 2 by a respectively hinge 4, whereby said loading platform 2 is in vieuw during a functional- and almost horizontal- position and can move up from a lower level 18 (groundsurface) upto at least one higher level or loadingfloor 9, whereby the platform 2 can be moved up on the opposite side of said hinges 4 to a vertical position closed and parallel on said columns 5 and said slides 3 with means of f.e. 2 tiltcylinders 19 or manual with springhelp, and whereby the liftsystem 1 can be fitted at the body 17 of a vehicle like a truck or a trailer, or a dockshelter, and whereby said slides 3 in moving to a down position can leave their respectively column 5 for a part of their length if the length of the underside of said columns 5 are not following completely the runningway of said slides 3 like f.e. a taillift or columnlift on a truck or trailer, whereby that both slides 3 are rigid attached to each other via a connectionbeam 6 (f.e.profile, tube) and rigid connections 12, at least each of said connections 12 connected on the opposite end of said, almost horizontal and rigid, connectionbeam 6, in which attachement both slides 3 together with said connectionbeam 6 becomes a rigid frame 7, wich frame 7 in one vieuw, f.e. by looking to the back of said truck has a U-form if said connectionbeam 6 is connected on the underside of both slides 3, or a H-form if said connectionbeam 6 is connected on a distance from the underside of said slides 3, whereby said connectionbeam 6 is is in a position almost equal or lower as the topdeck of said loading platform 2, whereby during the up-and-down movements of said platform 2, and whereby said cylinders 10 can moving out-of-synchrome with regard to each other 10, said rigid frame 7 gives resistance on canting between said columns 5 in a way that during the up and down movements of said platform 2, this platform 2 his topdeckend 21, at least on the side 26 of said slides 3, stays almost parallel with the level of the topdeckend 20 of said loadingfloor 9. See figures nr 1 upto nr 12.

Also gives the invention the possibility that said slides 3 in moving to a down position leave their respectively column 5 for a part of their length, because the length of the underside of said columns 5 are not following completely the runningway of said slides 3 See figures nr 1 upto nr 12.

In a futher development of the invention it is possible that said slides 3 extends extra upwards in their respectively columns 5, more then what is necessary for a liftsystem 1 with a classic synchronisationsystem, in a way that if said cylinders 10 are moving out-of -synchrome with regard to each other 10, said rigid frame 7 gives resistance on canting between said columns 5 in a way that during the up and down moving of said platform 2 only a minimal and practical admissible deviation is possible from said parallel position of said topdeckend 21) of the platform 2 in regard to said topdeckend 20 of the loadingfloor 9.

Important is that above the topdeck 21 of the loading platform 2 there is no need for a connection between said two slides 3, also because how longer said slides 3 are extending extra upwards, how more resistance they give in said extra extention, This is a big advantage because of the opening 24 between the liftframe stays free for passage to the loadingfloor, and there is no risk for siccor-effect during the movement of the lift platform 2 between said extra connectionbeam and the passing loadingfloors. The rigid frame 7 is composed by two extended slides 3 and one connectionbeam 6, placed equal or lower than the topdeck of the loading platform 2, this from one vieuw in H-form or U-form. A liftsystem 1 with a classic synchronisationsystem, f.e. a cable- or chainsystem or an hydraulic dividing system , needs only enough length of the said slides (3) for holding the effort (moment) of the load on the platform only in one direction. The effort in the other direction is hold bij the synchronisationsystem. In the case of this invention it is the rigid frame 7 in position between said 2 columns 5 who has to give resistance to last said effort. See figures nr 1,7,8,9.

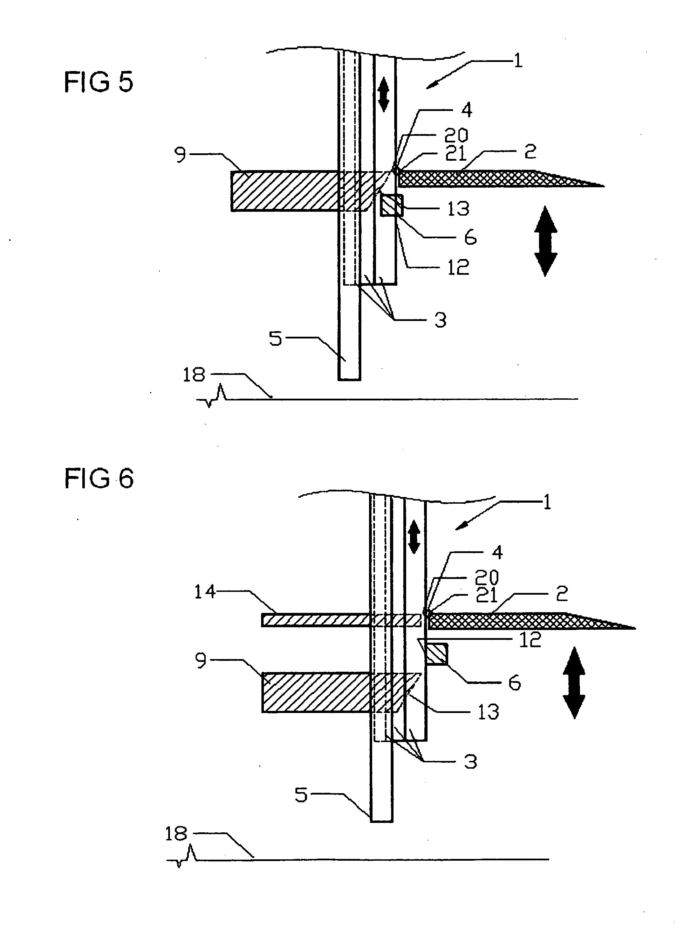

An important execution of the invention can be that at least during a horizontal (open) position of said platform 2 moved up on the level of said loadingfloor 9, said connectionbeam 6 is placed in a lower position as said platform 2, in a way that the topdeck of said loadingfloor 9 can reach close to the topdeck of said platform 2, in a way that said connectionbeam 6 can not come in collision with said loadingfloor 9. See figure nr 5,6,7,8,9.10,11,12

Practical can extend said loadingfloor 9 between said columns 5 in direction of the said platform 2 in vertical and/or horizontal position, and extend also futher between said slides 3, see figure 5.

In a futher development of preceding execution of the invention, said connectionbeam 6 can be, during the position of said platform 2 on the level of said loadingfloor 9, in a position giving enough height to give space for the tickness of said loadingfloor 2 including eventual safetyprofile 13, to avoid collision with said loadingfloor 9. See figure nr 5.

In a futher development of the invention said connectionbeam 6 can positioned and formed in a way that it can pass a loadingfloor 9 by moving up the platform 2 to a second floor 14. See figures nr 6,10,12

An important possible execution of the invention can be that the border of said loadingfloor (9) is a hinging profile (construction) (16), which hinging profile (16) can hinged up to a second position to give space to said connectionbeam (6) to pass said loadingfloor (9) by moving up the platform (2) to a second floor (14), f.e. by an U-form around said extended loadingfloor (9) from upside vieuw.

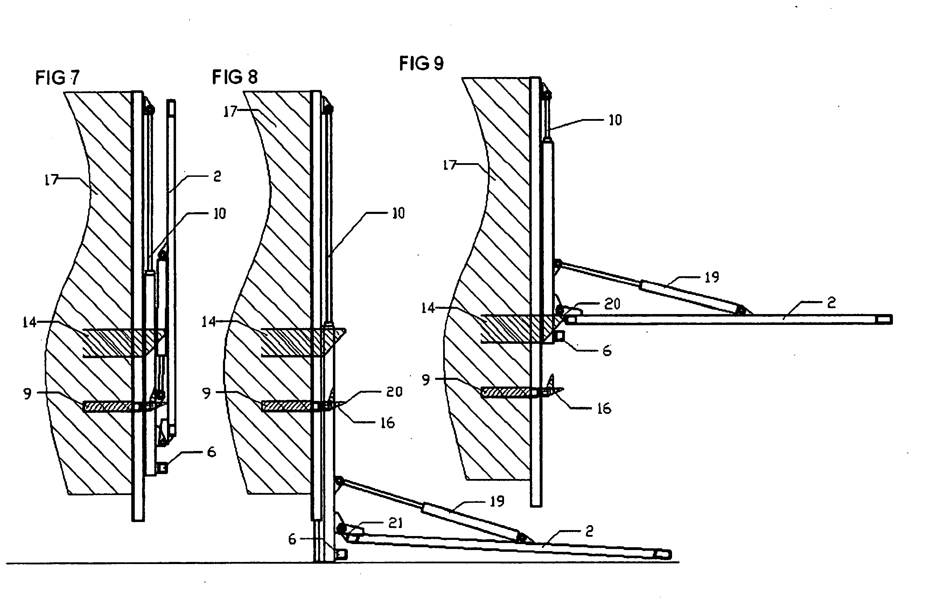

### See figures nr 7,8,9.

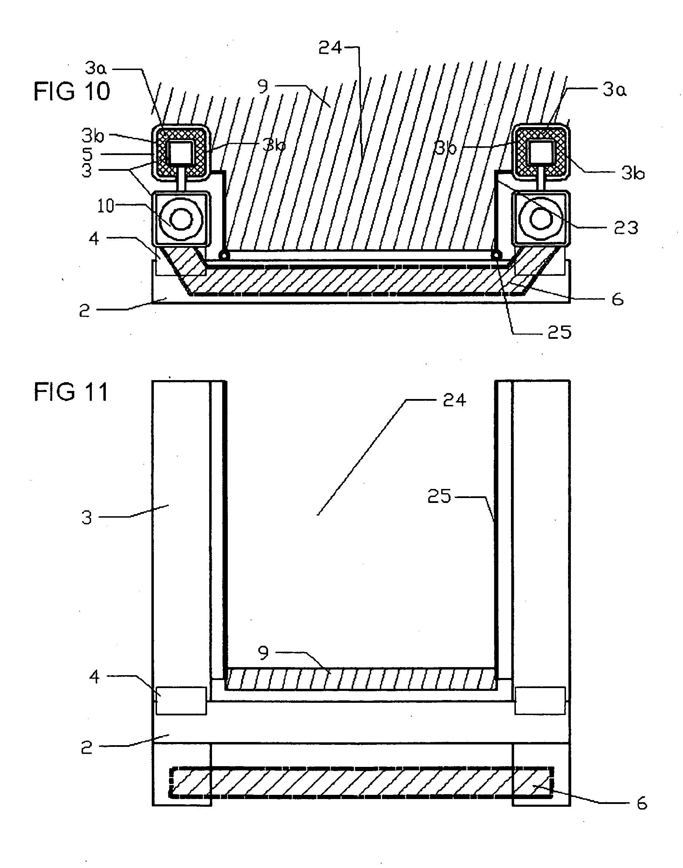

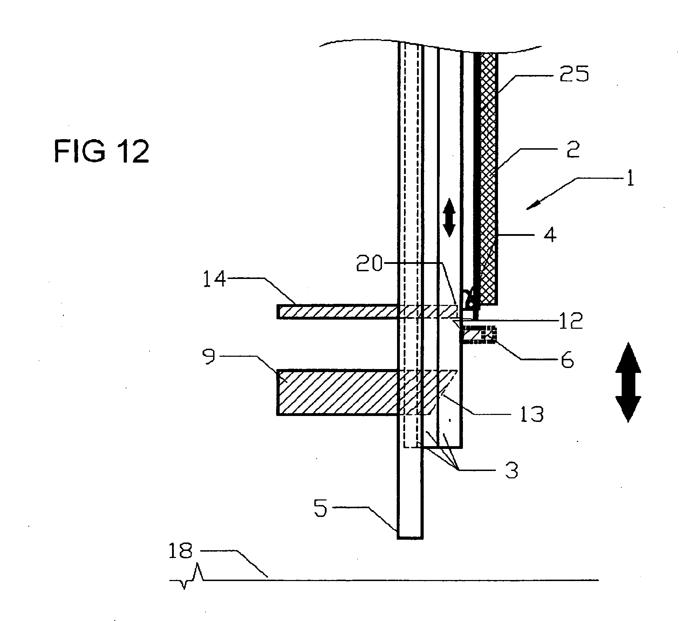

Futher gives preceding executions of the invention the possibility that in vertical (closed) position of said platform 2, the extended loadingfloor 9 together with the vertical inside sealingpanels 25 placed between said columns 5 and at the underside connected respectively one on the left side and one on the other side of said extended loadingfloor 9, are closing the opening 24 in the liftframe 22 together with said platform 2, well-known that the opening 24 between liftframe is formed by said loadingfloor 9 and the two vertical and parallel columns 5, and that said slides 3 are moving up and down on the outside of the space between said sealingpanels 25 included said sealingpanels 25, and outside said loadingfloor 9, see on figure nr 10 vieuw upside with vertical (closed) platform, and figure nr 11 vieuw on the back of the platform 2 in horizontal (open) position and figure nr 12 sidevieuw with platform 2 in vertical (closed) position.

An important possible execution of the invention can be that during a horizontal position of said platform 2 moved up on the level of a said loadingfloor 9. said connectionbeam 6 forms a bridgeconstruction between said platform 2 and said loadingfloor 9, whereby the top of the loading platform 2 is almost equal with the top of said connectionbeam 6.

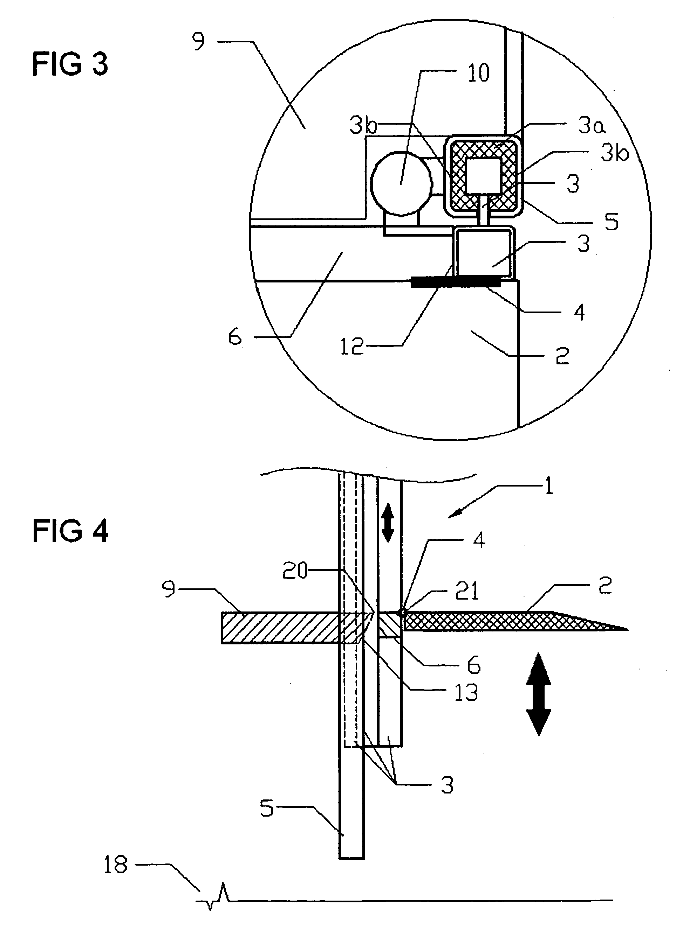

See figures nr 1,2,3,4. This variation on design of the invention gives difficulties to close said platform (2) against inside sealingpanels 25, because said connectionbeam will come in collision with said vertical inside sealingpanels 25 or an dangerous scissor-effect between the underside of said sealingpanels 25 and said connectionbeam 6 will be crated. The advantage of this design of the invention is that the said connectionbeam 6 and the platform 2 in functional (horizontal, open) position is in one and the same almost horizontal level placed. This gives the advantage f.e. that the platform can comes flat on the groundsurface in a low position. For closing the platform has to find another way.

In the preceding execution of the invention it is possible that said platform 2 is connected via hinges at least on said connectionbeam (6) and eventual also together with the hinges 4 on the slides 3 in one axle placed. See figures nr 1,2,3,4.

## Claims

1. A liftsystem (1) provided with two almost vertical placed columns (rails) (5), both columns (5) on a distance and parallel to each other, and each column (5) provided with a slide (3), both slides (3) independent from each other, whereby each slide (3) can be moved along or through a said respectively column (5), each moved up by a respectively cylinder (10) and moved down at least by the weight of a loading platform(2) and the eventual load on it, and each slide (3) connected to said loading platform (2) by a respective hinge (4), whereby said loading platform (2) is in view during a functional- and almost horizontal- position and can move up from a lower level (18) up to at least one higher level or loading floor (9), whereby both slides (3) are rigidly attached to each other via a connection beam (6) and rigid connections (12), each of said connections (12) connected near on the opposite end of said, almost horizontal and rigid, connection beam (6), in which attachment of both slides(3) together with said connection beam (6) becomes a rigid frame (7), whereby said connectionbeam (6) is in a position almost equal to or lower than the top surface of said loading platform (2), **characterised in that** during the up-and-down movements of said platform (2) and whereby said cylinders (10) are moving asynchronously with regard to each other (10), said rigid frame (7) gives resistance on canting between said columns (5) in a way that during the up and down movements of said platform (2), the top surface (21) of the platform (2) at least on the side (25) of said slides (3), stays almost parallel with the level of the top surface (20) of said loading floor (9).

2. A liftsystem (1) as claimed in claim 1, in which said slides (3) in moving to a down position leave their respectively column (5) for a part of their length, whereby said slides (3) extends extra upwards in their respectively columns (5), in a way that if said cylinders (10) are moving-out-of -synchrome with regard to each other(10), said rigid frame (7) gives resistance on canting between said columns (5) in a way that during the up and down moving of said platform (2) only a minimal and practical admissible deviation is possible from said parallel position of said topdeckend (21) of the platform (2) in regard to said topdeckend (20) of the loadingfloor (9).

3. A liftsystem (1) as claimed in one or more of the preceding claims, in which at least during a horizontal position of said platform (2) moved up on the level of said loadingfloor (9), said connectionbeam (6) is placed in a lower position as said platform (2), in a way that the topdeck of said loadingfloor (9) can reach close to the topdeck of said platform (2), in a way that said connectionbeam (6) can not come in collision with said loadingfloor (9).

4. A liftsystem (1) as claimed in claim 3, in which said connectionbeam (6) is, during the position of said platform (2) on the level of said loadingfloor (9), in a position giving enough height to give space for the tickness of said loadingfloor (2) including eventual safetyprofile (13), to avoid collision with said loadingfloor (9).

5. A liftsystem (1) as claimed in claim 3, in which said connectionbeam (6) is positioned and formed in a way that it can pass a loadingfloor (9) by moving up the platform (2) to a second floor (14).

6. A liftsystem (1) as claimed in claim 3, in which that the border of said loadingfloor (9) is a hinging profile (construction) (16), which hinging profile (16) can hinged up to a second position to give space to said connectionbeam (6) to pass said loadingfloor (9) by moving up the platform (2) to a second floor (14),

7. A liftsystem (1) as claimed in one or more of the preceding claims, in which that in vertical (closed) position of said platform (2), the extended loadingfloor (9) together with the vertical inside sealingpanels (25) placed between said columns (5) and at the underside connected respectively one on the left side and one on the other side of said extended loadingfloor (9), are closing the opening (24) in the liftframe (22) together with said platform (2),

8. A liftsystem (1) as claimed in one or more of the preceding claims, in which during a horizontal position of said platform (2) moved up on the level of a said loadingfloor (9) said connectionbeam (6) forms a bridgeconstruction between said platform (2) and said loadingfloor (9), whereby the top of the loading platform (2) is almost equal with the top of said connectionbeam (6).

9. A liftsystem (1) as claimed in claim 8, in which that said platform (2) is connected via hinges only on said connectionbeam (6).

10. A liftsystem (1) as claimed in claim 8, in which that said platform (2) is connected via hinges on said slides (3) and on said connectionbeam (6).

## Patentansprüche

1. Ein Hubsystem (1) mit zwei mehr oder weniger senkrecht aufgestellten Säulen (Schienen) (5), wobei die beiden Säulen (5) voneinander getrennt und parallel zueinander stehen und eine jede Säule (5) mit jeweils einem Gleitstück (3) versehen ist, beide Gleitstücke (3) unabhängig voneinander sind und wobei jedes Gleitstück (3) entlang oder über eine Säule (5) gleitet und von jeweils einem Zylinder (10) hinaufbewegt und zumindest vom Gewicht einer Ladefläche (2) und vom Gewicht der sich auf der Ladefläche gegebenenfalls befindenden Last nach unten bewegt wird, wobei jedes Gleitstück (3) mit der betreffenden Ladefläche (2) durch jeweils ein Scharnier (4) verbunden ist und die Ladefläche (2) sich in einer betriebsbereiten und beinahe waagerechten Position im Blickfeld befindet und von einer niedrigeren Position (18) auf eine zumindest höhere Position oder auf die Ladeebene (9) bewegt werden kann, wobei die beiden Gleitstücke (3) durch einen Verbindungsbalken (6) und starre Verbindungen (12) miteinander verbunden sind und jede dieser Verbindungen (12) in der Nähe des entgegengesetzten Endes des betreffenden, mehr oder weniger waagerechten, starren Verbindungsbalken (6) befestigt sind, wobei in dieser Anordnung die beiden Gleitstücke (3) zusammen mit dem betreffenden Verbindungsbalken (6) einen starren Rahmen (7) bilden, in dem der Verbindungsbalken (6) sich fast auf gleicher Höhe mit oder unter der Oberfläche (21) der betreffenden Ladefläche (2) befindet, wobei bei den Auf- und Abwärtsbewegungen dieser Ladefläche (2), bei denen die erwähnten Zylinder (10) sich asynchron zueinander bewegen, der erwähnte starre Rahmen (7) einen Widerstand an den Ecken zwischen den Säulen (5) bildet, so dass bei den Auf- und Abwärtsbewegungen der Ladefläche (2) die Oberfläche (21) der Ladefläche (2) zumindest auf der Seite (25) der erwähnten Gleitstücke (3) mehr oder weniger parallel zur Oberfläche (20) der Ladeebene (9) steht.

2. Ein Hubsystem (1) entsprechend dem Patentanspruch 1, bei dem die erwähnten Gleitstücke (3) beim Sinken auf eine niedrigere Position die jeweilige Säule (5) um einen Teil ihrer Länge verlassen, wobei diese Gleitstücke (3) sich zusätzlich aufwärts an ihren Säulen (5) dehnen, so dass, wenn die erwähnten Zylinder (10) sich asynchron zueinander bewegen (10), der starre Rahmen (7) einen Widerstand an der Ecke zwischen den beiden Säulen (5) bildet, so dass bei der Auf- und Abwärtsbewegung der erwähnten Ladefläche (2) lediglich eine geringfügige und praktisch zulässige Abweichung von der erwähnten Parallelität zwischen der Oberfläche (21) der Ladefläche (2) und der erwähnten Oberfläche (20) der Ladeebene (9) entstehen kann.

3. Ein Hubsystem (1) entsprechend einem oder mehreren vorhergehenden Patentansprüchen, bei dem zumindest in der waagerechten Position der erwähnten Ladefläche (2) auf der Höhe wie der Ladeebene (9) der erwähnte Verbindungsbalken (6) tiefer als besagte Ladefläche (2) angebracht wird, so dass die Oberfläche der erwähnten Ladeebene (9) sich dermaßen weit der erwähnten Oberfläche der Ladefläche (2) nähern kann, dass der betreffende Verbindungsbalken (9) nicht mit der erwähnten Ladeebene (9) zusammenstoßen kann.

4. Ein Hubsystem (1) entsprechend dem Patentanspruch 3, bei dem der Verbindungsbalken (6), wenn die Ladefläche (2) sich auf der Höhe der Ladeebene (9) befindet, in einer Position ist, in der eine ausreichende Höhe für die Dicke der Ladefläche (2), einschließlich einer unter Umständen vorhandenen Schutzleiste (13), gegeben ist und ein Zusammenstoß mit fraglicher Ladeebene (9) verhindert wird.

5. Ein Hubsystem (1) entsprechend dem Patentanspruch 3, bei dem der Verbindungsbalken (6) solchermaßen angeordnet und geformt ist, dass er an der Ladeebene (9) vorbeikommt, wenn die Ladefläche (2) auf eine zweite Ebene (14) hochgefahren wird.

6. Ein Hubsystem (1) entsprechend dem Patentanspruch 3, bei dem der Rand der fraglichen Ladeebene (9) eine Scharnierleiste(nkonstruktion) (16) darstellt, die auf eine andere Position geschwenkt werden kann, so dass der erwähnten Verbindungsbalken (6) genügend Platz hat, um beim Hochfahren der Ladefläche (2) auf eine andere Ebene (14) an besagter Ladeebene (9) vorbeizukommen.

7. Ein Hubsystem (1) entsprechend einem oder mehreren vorigen Patentansprüchen, bei dem in der senkrechten (geschlossenen) Position der Ladefläche (2) die ausgefahrene Ladeebene (9) zusammen mit den senkrechten innenliegenden Verschlussplatten (25), die zwischen den erwähnten Säulen (5) angebracht und an ihrer unteren Seite jeweils an der linken und rechten Seite der ausgefahrenen Ladeebene (9) befestigt sind, die Öffnung (24) im Hubrahmen (22) zusammen mit der erwähnten Ladefläche (2) schließen.

8. Ein Hubsystem (1) entsprechend einem oder mehreren vorhergehenden Patentansprüchen, bei dem der erwähnte Verbindungsbalken (6) in der waagerechten Position der Ladefläche (2) auf der Höhe der erwähnten Ladeebene (9) eine Brücke zwischen der Ladefläche (2) und der Ladeebene (9) bildet, wobei die Oberseite der Ladefläche (2) beinahe mit der Oberseite des Verbindungsbalkens (6) in einer Ebene liegt.

9. Ein Hubsystem (1) entsprechend dem Patentanspruch 8, bei dem die erwähnte Ladefläche (2) mittels Scharniere lediglich am erwähnten Verbindungsbalken (6) befestigt ist.

10. Ein Hubsystem (1) entsprechend dem Patentanspruch 8, bei dem die erwähnte Ladefläche (2) mittels Scharniere mit den Gleitstücken (3) und dem Verbindungsbalken (6) verbunden ist.

## Revendications

1. Un système de monte-charge (1) équipé de deux colonnes (rails) placées pratiquement à la verticale (5), chacune des colonnes (5) à distance et parallèlement l'une à l'autre, et chaque colonne (5) équipée d'un toboggan (3), chacun des toboggans (3) indépendamment l'un de l'autre, ce par quoi chaque toboggan (3) peut être déplacé le long de, ou dans une dite colonne respective (5), chacun déplacé vers le haut par un cylindre (10) et déplacé vers le bas par au minimum le poids d'une plate-forme de chargement (2) et la charge éventuelle placée dessus, et chaque toboggan (3) raccordé à ladite plate-forme de chargement (2) par une charnière respective (4), ce par quoi ladite plate-forme de chargement (2) est en vue pendant une position fonctionnelle - et pratiquement horizontale - et peut se déplacer vers le haut au départ d'un niveau moins élevé (18) jusqu'à au minimum un niveau ou sol de chargement (9) plus élevé, ce par quoi les deux toboggans (3) sont attachés rigidement l'un à l'autre via une poutrelle de raccordement (6) et des raccordements rigides (12), chacun desdits raccordements (12) étant raccordés près de l'extrémité opposée de ladite poutrelle de raccordement (6), pratiquement horizontale et rigide, dans laquelle fixation des deux toboggans (3) ensemble avec ladite poutrelle de raccordement (6) devient un cadre rigide (7), ce par quoi ladite poutrelle de raccordement (6) est dans une position pratiquement égale à ou plus basse que la surface supérieure de ladite plate-forme de chargement (2), **caractérisée en ce que**, pendant les mouvements vers le haut et vers le bas de ladite plate-forme (2) et ce par quoi lesdits cylindres (10) se déplacent de façon asynchrone l'un par rapport à l'autre (10), ledit cadre rigide (7) exerce une résistance à s'incliner entre lesdites colonnes (5) d'une façon à ce que pendant les mouvements vers le haut et vers le bas de ladite plate-forme (2), la surface supérieure (21) de la plate-forme (2), au minimum sur le côté (25) desdits toboggans (3), reste pratiquement parallèle au niveau de la surface supérieure (20) dudit sol de chargement (9).

2. Un système de monte-charge (1) tel que déclaré dans la déclaration 1, dans laquelle lesdits toboggans (3) dans leur déplacement vers une position vers le bas laissent leur colonne respective (5) pour une partie de leur longueur, ce par quoi lesdits toboggans (3) s'étendent davantage vers le haut dans leur colonnes respectives (5), d'une façon que, si lesdits cylindres (10) se déplacent de façon asynchrone l'un par rapport à l'autre (10), ledit cadre rigide (7) offre de la résistance à s'incliner entre lesdites colonnes (5) de telle façon à ce que pendant le déplacement vers le haut et vers le bas de ladite plate-forme (2), uniquement une déviation minimale et admissible dans la pratique est possible au départ de ladite position parallèle de ladite extrémité du plateau supérieur (21) de la plate-forme (2) par rapport à ladite extrémité du plateau supérieur (20) du sol de chargement (9).

3. Un système de monte-charge (1) tel que déclaré dans une ou plusieurs des déclarations qui précèdent, dans lequel au minimum pendant une position horizontale de ladite plate-forme (2) déplacée vers le niveau dudit sol de chargement (9), ladite poutrelle de raccordement (6) est placée dans une position moins élevée que ladite plate-forme (2), de telle façon à ce que le plateau supérieur dudit sol de chargement (9) peut arriver près du plateau supérieur de ladite plate-forme (2), d'une telle façon à ce que ladite poutrelle de raccordement (6) ne peut pas entrer en collision avec ledit sol de chargement (9).

4. Un système de monte-charge (1) tel que déclaré dans la déclaration 3, dans lequel ladite poutrelle de raccordement (6) est, pendant la position de ladite plate-forme (2) au niveau dudit sol de chargement (9), dans une position offrant suffisamment de hauteur pour donner de l'espace pour l'épaisseur dudit sol de chargement (2) incluant un éventuel profil de sécurité (13), afin d'éviter la collision avec ledit sol de chargement (9).

5. Un système de monte-charge (1) tel que déclaré dans la déclaration 3, dans lequel ladite poutrelle de raccordement (6) est positionnée et formée d'une façon telle qu'elle peut passer un sol de chargement (9) en déplaçant la plate-forme (2) jusqu'à un deuxième sol (14).

6. Un système de monte-charge (1) tel que déclaré dans la déclaration 3, dans lequel le bord dudit sol de chargement (9) est un profil à charnière (construction) (16), lequel profil à charnière (16) peut être mis jusque dans une seconde position pour donner de l'espace à ladite poutrelle de raccordement (6) pour passer ledit sol de chargement (9) en déplaçant la plate-forme (2) vers le haut jusqu'à un deuxième sol (14),

7. Un système de monte-charge (1) tel que déclaré dans une ou plusieurs des déclarations qui précèdent, dans lequel ladite plate-forme (2) en position verticale (fermée), le sol de chargement étendu (9), ensemble avec les panneaux de scellement verticaux intérieurs (25) placés entre lesdites colonnes (5) et du côté inférieur respectivement raccordés l'un du côté gauche et l'autre de l'autre côté dudit sol de chargement étendu (9) ferment l'ouverture (24) dans le cadre de monte-charge (22) ensemble avec ladite plate-forme (2),

8. Un système de monte-charge (1) tel que déclaré dans une ou plusieurs des déclarations qui précèdent, dans lequel pendant une position horizontale de ladite plate-forme (2) déplacée vers le haut vers le niveau d'un dit sol de chargement (9), ladite poutrelle de raccordement (6) constitue une construction en pont entre ladite plate-forme (2) et ledit sol de chargement (9), ce par quoi le sommet de la plate-forme de chargement (2) est pratiquement équivalent au sommet de ladite poutrelle de raccordement (6).

9. Un système de monte-charge (1) tel que déclaré dans la déclaration 8, dans lequel cette dite plate-forme (2) est raccordée via des charnières uniquement sur ladite poutrelle de raccordement (6).

10. Un système de monte-charge (1) tel que déclaré dans la déclaration 8, dans lequel cette dite plate-forme (2) est raccordée via des charnières aux dits toboggans (3) et à ladite poutrelle de raccordement (6).
